# EUROPEAN PATENT APPLICATION

(11) **EP 1 657 484 A1**
(43) Date of publication of application: **17.05.2006**
(21) Application number: 05024450.8
(22) Date of filing: 09.11.2005
(51) Int. Cl.: F16M 11/12, H04N 5/225, F16M 11/18

(54) **Pan head device**

(30) Priority: 11.11.2004 JP 2004327819
(71) Applicant: Fujinon Corporation, Saitama-shi, Saitama (JP)
(72) Inventor: Wasada, Masayoshi c/o Fujinon Corporation, Saitama-shi, Saitama (JP)
(74) Representative: Klunker . Schmitt-Nilson . Hirsch

(57) **Abstract**

The present invention provides a pan head device capable of suppressing an influence of wind pressure by downsizing the entire pan head device. A tilt motor (25) of a pan head device (10) is fixed to an inner wall portion of a casing (22) of a rotary part (16), and a worm gear (24) mounted to an output shaft is meshed with a worm wheel (27) fixed to a tilt shaft (26). A television camera housing (12) is mounted to one end side of the tilt shaft (26), and a transmission device (14) is mounted to the other end side. When an operator remotely operates the tilt motor (25) by operating a controller (42), the tilt shaft (26) rotates around an axis B, and therefore, the television camera housing (12) and the transmission device (14) are operated to turn in the same vertical direction at the same time. As a driving device for the television camera housing (12) and the transmission device (14), the tilt shaft (26) and one tilt motor (25) are commonly used, and therefore, the entire pan head device can be downsized, whereby an influence of wind pressure can be suppressed as much as possible.

## Description

### BACKGROUND OF THE INVENTION

### Field of the Invention

The present invention relates to a pan head device, and particularly relates to a pan head device in which a television camera is disposed at one side and a transmission device is disposed at the other side with a rotary part therebetween.

### Description of the Related Art

Japanese Patent Application Laid-Open No. 2004-96519 discloses a pan head device in which a television camera is disposed at one side and a transmission device is disposed at the other side with a rotary part of the pan head therebetween.

In this pan head device, a vertical rotary drive part of the television camera is incorporated in the rotary part so that the driving force of the vertical rotary drive part is transmitted to a housing of the television camera via a mount which is provided at a side surface at one side of the rotary part. A vertical rotary drive part dedicated for the transfer device is mounted to a side surface at the other side of the rotary part, so that the driving force of the vertical rotary drive part is transmitted to the transmission device.

However, the pan head device of Japanese Patent Application Laid-open No. 2004-96519 has the disadvantage that the device is large in size because it is provided with the vertical rotary drive part dedicated for the transmission device in addition to the vertical rotary drive part of the television camera. Besides, as the pan head device of this kind which is used outdoors, the pan head device is significantly susceptible to wind pressure, which causes the problem of having an adverse effect on a rotating operation of the pan head device.

### SUMMARY OF THE INVENTION

The present invention is made in view of the above circumstances, and has an object to provide a pan head device capable of suppressing an influence of window pressure as much as possible by downsizing the entire device.

According to the invention described in a first aspect, in order to achieve the above described object, a pan head device is, in a pan head device in which a television camera is disposed at one side and a transmission device is disposed at the other side with a body part of a pan head sandwiched between the television camera and the transmission device, characterized in that the television camera and the transmission device are connected to respective end portions of a common rotary shaft disposed in the body part, and are driven by a common driving section which drives the rotary shaft to be operated to turn.

According to the invention described in a second aspect, in the pan head device according to the first aspect, the pan head device is characterized in that the common rotary shaft of the pan head device is divided into two that are a first rotary shaft and a second rotary shaft via a clutch mechanism which transmits and shuts off power, and the first rotary shaft or the second rotary shaft is connected to the driving section.

According to the invention described in a third aspect, in the pan head device according to the first aspect, the pan head device is characterized in that the common rotary shaft of the pan head device is divided into three that are a first rotary shaft, a second rotary shaft and a third rotary shaft via a first clutch mechanism and a second clutch mechanism which transmit and shut off power, and the second rotary shaft located at a center is connected to the driving section.

According to the invention described in the first aspect, the television camera and the transmission device are connected to the end portions of the common rotary shaft disposed in the body part, and are driven by the common driving section which drives the rotary shaft to be operated to turn. Thereby, the rotary shaft and the driving section are commonly used as the driving device for the television camera and the transmission device. Therefore, the entire device can be downsized and an influence of wind pressure can be suppressed as much as possible. The rotary shaft is disposed in the body part to penetrate through the body part, the television camera is connected to one end of the rotary shaft, the transmission device is connected to the other end, and the driving section is incorporated in the body part, whereby the rotary shaft and the driving section are not exposed to an outside, and further become advantageous against wind pressure.

According to the invention described in the second aspect, the first rotary shaft of the television camera and the second rotary shaft of the transmission device are connected via the clutch mechanism which transmits and shuts off power, and the first rotary shaft or the second rotary shaft is connected to the driving section which drives the first rotary shaft and/or the second rotary shaft. For example, when the driving section drives the first rotary shaft and the clutch mechanism is switched to the side to shut off the power, only the first rotary shaft is driven by the driving section and only the television camera is operated to turn. For example, when the driving section drives the first rotary shaft, and the clutch mechanism is switched to the side to transmit the power, the first rotary shaft and the second rotary shaft are driven by the driving section, and the television camera and the transmission device are operated to turn at the same time. On the other hand, for example, when the driving section drives the second rotary shaft and the clutch mechanism is switched to the side to shut off the power, only the second rotary shaft is driven by the driving section and only the transmission device is operated to turn. For example, when the driving section drives the second rotary shaft, and the clutch mechanism is switched to the side to transmit the power, the second rotary shaft and the first rotary shaft are driven by the driving section, and the transmission device and the television camera are operated to turn at the same time. Thereby, the driving section is commonly used as the driving device for the television camera and the transmission device, the entire device can be downsized and an influence of wind pressure can be suppressed as much as possible. The first rotary shaft and the second rotary shaft are disposed in the body part by penetrating through the body part, and the driving section is incorporated in the body part, whereby the first rotary shaft, the second rotary shaft and the driving section are not exposed to an outside, and further become advantageous against wind pressure.

According to the invention described the third aspect, the first rotary shaft of the television camera and the third rotary shaft of the transmission device are respectively connected to the respective end portions of the second rotary shaft connected to the driving section via the first clutch mechanism and the second clutch mechanism which transmit and shut off the power. When the first clutch mechanism provided at one side of the second rotary shaft is switched to the side to transmit the power to the first rotary shaft, and the second clutch mechanism provided at the other side of the second rotary shaft is switched to the side to shut off the power to be applied to the third rotary shaft, only the first rotary shaft is driven by the driving section and only the television camera is operated to turn. When the first clutch mechanism is switched to the side to shut off the power to be applied to the first rotary shaft and the second clutch mechanism is switched to the side to transmit the power to the third rotary shaft, only the third rotary shaft is driven by the driving section and only the transmission device is operated to turn. When the first clutch mechanism is switched to the side to transmit the power to the first rotary shaft, and the second clutch mechanism is switched to the side to transmit the power to the third rotary shaft, the first rotary shaft and the third rotary shaft are driven by the driving section and the television camera and the transmission device are operated to turn at the same time. Thereby, the driving section is commonly used as the driving device for the television camera and the transmission device, whereby the entire device can be downsized, and an influence of wind pressure can be suppressed as much as possible. The first rotary shaft, the second rotary shaft and the third rotary shaft are disposed in the body part to penetrate through the body part, whereby the first rotary shaft, the second rotary shaft and the third rotary shaft are not exposed to the outside, which further becomes advantageous against wind pressure.

The invention described in the fourth aspect is, in any one invention of the first, the second and the third aspects, characterized by including a drive control unit which remotely controls the driving section. In the case of the pan head device for monitoring which is used in the outdoors such as a rooftop of a building, the driving section of the pan head device is remotely controlled by the drive control unit placed in the controller chamber of the building.

The invention described in the fifth aspect is, in the invention of any one of the second or the third aspects, characterized by including a clutch control unit which remotely controls switching of transmission and shutoff of the power by the clutch mechanism. In the case of the pan head device for monitoring which is used in the outdoors such as a rooftop of a building, the clutch of the pan head device is remotely controlled by the clutch control unit placed in the controller chamber of the building.

The invention described in the sixth aspect is, in the invention described in any one of the first, the second, the third, the fourth and the fifth aspects, characterized in that the body part is a rotary part, and the rotary shaft is the tilt shaft which turns the television camera and the transmission device in the vertical direction. The rotary part of the pan head device is vertically provided at the base of the building via the pan shaft, and is turned in the horizontal direction via the pan shaft. The television camera and the transmission device are connected to the body part via the tilt shaft, and are turned in the vertical direction via the tilt shaft. Thereby, the present invention is characterized in that the body part is the rotary part and the rotary shaft is the tilt shaft.

According to the pan head device of the present invention, the television camera and the transmission device are connected to the end portions of the common rotary shaft disposed in the body part, and are driven by the common driving section which drives the rotary shaft to be operated to turn. Therefore, the entire device is downsized and an influence of wind pressure can be suppressed as much as possible.

### BRIEF DESCRIPTION OF THE DRAWINGS

Fig. 1 is a front view showing a state in which a television camera housing and a transmission device are mounted to a pan head device of a first embodiment;
Fig. 2 is a front view showing a state in which the television camera housing and the transmission device are mounted to a pan head device of a second embodiment; and
Fig. 3 is a front view showing a state in which the television camera housing and a transmission device are mounted to a pan head device of a third embodiment.

### DETAILED DESCRIPTION OF THE PREFERRED EMBODIMENTS

Preferred embodiments of a pan head device according to the present invention will be described in detail in accordance with the attached drawings hereinafter.

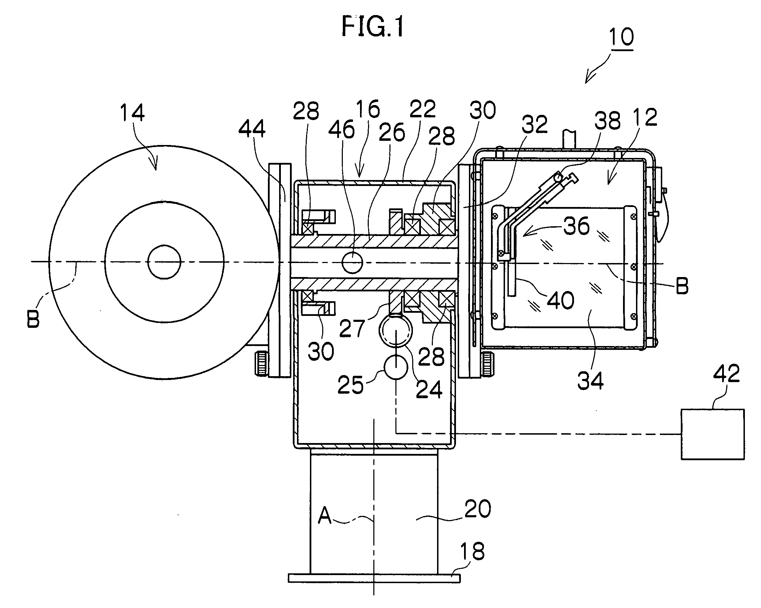

Fig. 1 is a pan head device 10 of a first embodiment, and shows an entire view of a television camera housing 12 and a transmission device 14 provided at both sides with a rotary part (body part) 16 of the pan head device 10 therebetween. Fig. 1 shows an internal structure of the rotary part 16 in a partial section. Such a pan head device 10 is placed on a rooftop or the like of a building.

The pan head device 10 is constructed by the rotary part 16 constructed into a box shape, a pedestal 18 and the like, and a pan shaft 20 is projectingly provided at a lower portion of the rotary part 16. The pan shaft 20 is fixed to the pedestal 18, and thereby, the rotary part 16 is vertically provided on the pedestal 18.

A pan motor (not shown) and a tilt motor 25 are incorporated in a casing 22 of the rotary part 16. The pan motor is fixed to an inner wall portion of the casing 22, and a worm gear (not shown) mounted to an output shaft of the pan motor is meshed with a worm wheel (not shown) fixed to the pan shaft 20. Thereby, when the pan motor is driven, the worm gear moves round a periphery of the worm wheel, and therefore, the rotary part 16 rotates with the pan motor in a horizontal direction around an axis A of the pan shaft 20 parallel with a vertical direction.

The tilt motor 25 is fixed to the inner wall portion of the casing 22, and the worm gear 24 mounted to an output shaft of the tilt motor 25 is meshed with a worm wheel 27 fixed to a tilt shaft (rotary shaft) 26. The tilt shaft 26 is disposed in the casing 22 to penetrate through the casing 22 in the horizontal direction, and both end portions of the tilt shaft 26 are rotatably supported by bearings 28, 28 and 28 mounted to a penetrated opening of the casing 22. Thereby, when the tilt motor 25 is driven, the worm gear 24 rotationally drives the worm wheel 27, and therefore, the tilt shaft 26 rotates around an axis B of the tilt shaft 26 parallel with the horizontal direction. Reference numeral 30 in Fig. 1 designates a mounting portion of the bearing 28, which is fixed to the inner wall portion of the casing 22.

The television camera housing 12 is fixed to a mount plate 32 which is fixed to a right end portion of the tilt shaft 26 in Fig. 1. Therefore, the television camera housing 12 is operated to turn in a vertical direction when the tilt shaft 26 is rotated around the axis B as described above. A television camera including a lens device is housed in the television camera housing 12, and a transparent protection glass 34 is mounted at a position opposed to a front bulb of the lens device. A wiper device 36 which removes water droplets and dust attaching to the protection glass 34 is provided at a front surface of the television camera housing, and the wiper device 36 includes a wiper blade 40 which oscillates to reciprocate around a shaft 38 to remove water droplets and dust attaching to the protection glass 34. Meanwhile, in the television camera, a solid state image pickup element on which a subject image taken in by the lens device is formed, an image processing unit which processes an electric charge signal outputted from the solid state image pickup element into an image signal, and the like are incorporated, and the image signal outputted from the image processing unit is outputted to a monitor (not shown) of an operator chamber (controller chamber) of a building, and the subject is displayed on this monitor. An operator of an operator chamber remotely operates the pan motor and the tilt motor 25 of the pan head device 10 with a controller (a drive control unit, a clutch control unit) 42 such as a joy stick while watching the image displayed on the monitor, and can point the television camera 12 in a desired direction.

Meanwhile, the transmission device 14 is a transmission device called an FPU (field Pickup Unit), which transmits and receives a projected image and sound for a relay, and is fixed to a rectangular mount plate 44 which is fixed to a left end portion of the tilt shaft 26 in Fig. 1. Therefore, the transmission device 14 is operated to turn in the vertical direction with the television camera housing 12 when the tilt shaft 26 is rotated around the axis B as described above. The transmission device 14 has an antenna for reception and transmission. The transmission device 14 can transmit a projected image signal of the projected image picked up by the television camera of the television camera housing 12 to a broadcasting station via an antenna for transmission. The transmission device 14 receives a projected image signal of a projected image picked up by another television camera with the antenna for reception, and can transmit this to the broadcasting station via the antenna for transmission. Reference numeral 46 designates an opening formed in the pipe-shaped tilt shaft 26, and a cable from the television camera housing 12 and the transmission device 14 is laid inside the tilt shaft 26 and is taken outside from the opening and wired.

Next, an operation of the pan head device 10 constructed as described above will be described.

When the operator in the operator chamber remotely operates the tilt motor 25 by operating the controller 42, the tilt shaft 26 rotates around the axis B, and therefore, the television camera housing 12 and the transmission device 14 which are fixed to the end portions of the tilt shaft 26 are operated to turn in the same vertical direction.

According to the pan head device 10, the tilt shaft 26 and one tilt motor 25 are commonly used as the driving device for the television camera housing 12 and the transmission device 14, and the tilt shaft 26 and the tilt motor 25 are incorporated in the casing 22 of the rotary part 16. Therefore, as compared with the pan head device of Japanese Patent Application Laid-Open No. 2004-96519 in which the vertical rotary drive part dedicated for the transmission device is provided at the side portion of the rotary part, the entire pan head device is downsized, and thereby, an influence of wind pressure can be suppressed as much as possible.

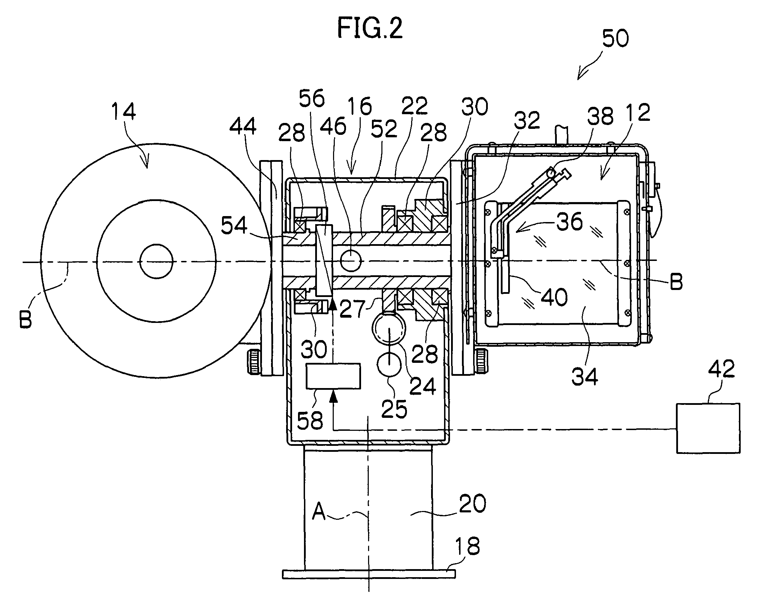

Fig. 2 shows a pan head device 50 of a second embodiment, and the same or the similar members as and to those of the pan head device 10 shown in Fig. 1 are given the same reference numerals and characters, and the explanation thereof will be omitted.

In a pan head device 50 shown in Fig. 2, a tilt shaft is divided into two on the same axis, and a tilt shaft (first rotary shaft) 52 and a tilt shaft (second rotary shaft) 54, which are two divided parts, are connected via an electromagnetic clutch (clutch mechanism) 56. The tilt shaft 52 is rotatably supported at the casing 22 of the rotary part 16 via the bearings 28 and 28, and the television camera housing 12 is fixed to an end portion projected from the opening of the right side surface of the casing 22 via the mount plate 32. The worm wheel 27 is mounted to the tilt shaft 52, and the worm gear 24 which is rotated by the tilt motor 25 is meshed with the worm wheel 27. Meanwhile, the tilt shaft 54 is rotatably supported at the casing 22 via the bearing 28, and the transmission device 14 is fixed to an end portion projected from the opening of a left side surface of the casing 22 via the mount plate 44.

A driving section 58 which turns the electromagnetic clutch 56 ON/OFF is incorporated in the rotary part 16. The driving section 58 as well as the tilt motor 25 and the pan motor is remotely operated by the controller 42.

According to the pan head device 50, when it is desired to operate the television camera housing 12 to turn, the driving section 58 is controlled by the controller 42 to turn OFF the electromagnetic clutch 56 to set the electromagnetic clutch 56 into the power shutoff state to the tilt shaft 54, and thereafter, the tilt motor 25 is remotely operated. Thereby, only the tilt shaft 52 is driven and only the television camera housing 12 is operated to turn.

When it is desired to operate the television camera housing 12 and the transmission device 14 to turn at the same time, the driving section 58 is controlled by the controller 42, the electromagnetic clutch 56 is turned ON to be set to the power transmission state to the tilt shaft 54, and thereafter, the tilt motor 25 is remotely operated. Thereby, the rotating force of the tilt shaft 52 is transmitted to the tilt shaft 54 via the electromagnetic clutch 56. Therefore, the tilt shafts 52 and 54 are driven in the same direction, and therefore, the television camera housing 12 and the transmission device 14 are both operated to turn.

According to the pan head device 50, one tilt motor 25 is commonly used as the driving device for the television camera housing 12 and the transmission device 14, and therefore, the entire pan head device is downsized, and an influence of wind pressure can be suppressed as much as possible. By controlling ON/OFF of the electromagnetic clutch 56, the television camera housing 12 and the transmission device 14 can be both or selectively operated to tilt.

In the pan head device 50, an example of the tilt motor 25 being mounted on the tilt shaft 52 is shown, but instead of this, the tilt motor 25 may be mounted to the tilt shaft 54. In this case, when it is desired to operate only the transmission device 14 to turn, the driving section 58 is controlled by the controller 42, and the electromagnetic clutch 56 is turned OFF, after which, the tilt motor 25 is remotely operated. Thereby, only the tilt shaft 54 is driven and only the transmission device 14 is operated to turn. When it is desired to operate the transmission device 14 and the television camera housing 12 to turn at the same time, the driving section 58 is controlled by the controller 42 to turn ON the electromagnetic clutch 56, and thereafter, the tilt motor 25 is remotely operated. Thereby, the rotating force of the tilt shaft 54 is transmitted to the tilt shaft 52 via the electromagnetic clutch 56. Therefore, the tilt shafts 54 and 52 are driven in the same direction, and therefore, the transmission device 14 and the television camera housing 12 are both operated to turn.

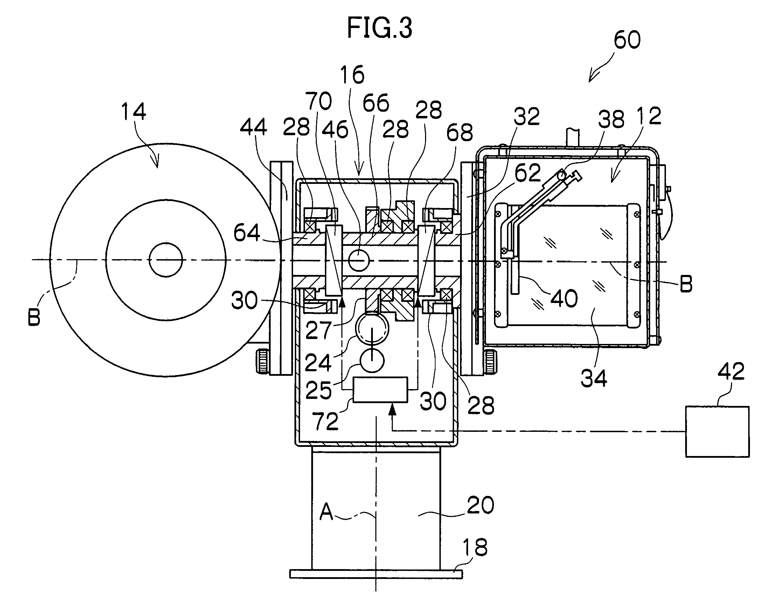

Fig. 3 shows a pan head device 60 of a third embodiment, and the same or the similar members as or to those in the pan head device 10 shown in Fig. 1 is given the same reference numerals and the explanation thereof will be omitted.

In the pan head device 60 shown in Fig. 3, a tilt shaft is divided into three on the same axis, and is constructed by a tilt shaft (first rotary shaft) 62, a tilt shaft (third rotary shaft) 64 and a drive shaft (second rotary shaft) 66. The tilt shaft 62 is connected to the drive shaft 66 via an electromagnetic clutch (first clutch mechanism) 68, and the tilt shaft 64 is connected to the drive shaft 66 via an electromagnetic clutch 70 (second clutch mechanism).

The tilt shaft 62 is rotatably supported at the casing 22 of the rotary part 16 via the bearings 28 and 28, and the television camera housing 12 is fixed to an end portion projected from the opening of the right side surface of the casing 22 via the mount plate 32. The tilt shaft 64 is rotatably supported at the casing 22 via the bearing 28, and the transmission device 14 is fixed to an end portion projected from the opening of the left side surface of the casing 22 via the mount plate 44. The worm wheel 27 is mounted to the drive shaft 66, and the worm gear 24 which is rotated by the tilt motor 25 is meshed with the worm wheel 27.

A driving section 72 which turns ON/OFF the electromagnetic clutches 68 and 70 is incorporated in the rotary part 16. The driving section 72 as well as the tilt motor 25 and the pan motor is remotely operated by the controller 42.

According to the pan head device 60, when it is desired to operate only the television camera housing 12 to turn, the driving section 72 is controlled by the controller 42, the electromagnetic clutch 68 is turned ON to be set to the power transmission state to the tilt shaft 62, and the electromagnetic clutch 70 is turned OFF to be set to the power shutoff state to the tilt shaft 64. Thereafter, the tilt motor 25 is remotely operated. Thereby, only the tilt shaft 62 is driven and only the television camera housing 12 is operated to turn.

When it is desired to operate only the transmission device 14 to turn, the driving section 72 is controlled by the controller 42, the electromagnetic clutch 68 is turned OFF to be set to the power shutoff state to the tilt shaft 62, and the electromagnetic clutch 70 is turned ON to be set to the power transmission state to the tilt shaft 64. Thereafter, the tilt motor 25 is remotely operated. Thereby, only the tilt shaft 64 is driven and only the transmission device 14 is operated to turn.

When it is desired to operate the television camera housing 12 and the transmission device 14 to turn at the same time, the driving section 72 is controlled by the controller 42, the electromagnetic clutch 68 is turned ON to be set to the power transmission state to the tilt shaft 62, and the electromagnetic clutch 70 is turned ON to be set to the power transmission state to the tilt shaft 64. Thereafter, the tilt motor 25 is remotely operated. Thereby, the tilt shafts 62 and 64 are driven in the same direction, and therefore, the television camera housing 12 and the transmission device 14 are both operated to turn.

According to the pan head device 60, one tilt motor 25 is commonly used as the driving device for the television camera housing 12 and the transmission device 14, and therefore, the entire pan head device is downsized, and an influence of wind pressure can be suppressed as much as possible. By controlling ON/OFF of the electromagnetic clutches 68 and 70, the television camera housing 12 and the transmission device 14 can be both or selectively operated to tilt.

## Claims

1. A pan head device (10) in which a television camera (12) is disposed at one side and a transmission device (14) is disposed at the other side with a body part (16) of a pan head sandwiched between the television camera (12) and the transmission device (14),
**characterized in that**:
the television camera (12) and the transmission device (14) are connected to respective end portions of a common rotary shaft (26) disposed in the body part (16), and are driven by a common driving section (25) which drives the rotary shaft (26) to be operated to turn.

2. The pan head device (10) according to claim 1,
wherein the common rotary shaft (26) of the pan head device (10) is divided into two that are a first rotary shaft (52) and a second rotary shaft (54) via a clutch mechanism (56) which transmits and shuts off power, and the first rotary shaft (52) or the second rotary shaft (54) is connected to the driving section (25).

3. The pan head device (10) according to claim 1,
wherein the common rotary shaft (26) of the pan head device (10) is divided into three that are a first rotary shaft (62), a second rotary shaft (66) and a third rotary shaft (64) via a first clutch mechanism (68) and a second clutch mechanism (70) which transmit and shut off power, and the second rotary shaft (66) located at a center is connected to the driving section (25).

4. The pan head device (10) according to any one of claims 1, 2 and 3, further comprising:
a drive control unit (42) which remotely controls the driving section (25).

5. The pan head device (10) according to claim 2 or 3, further comprising:
a clutch control unit (58, 72) which remotely controls switching of transmission and shutoff of the power by the clutch mechanism (56, 68, 70).

6. The pan head device (10) according to claim 1, 2, 3, 4 or 5,
wherein the body part (16) is a rotary part, and the rotary shaft (26) is a tilt shaft which turns the television camera (12) and the transmission device (14) in a vertical direction.
